# EUROPÄISCHE PATENTSCHRIFT

(11) **EP 1 891 310 B1**
(45) Veröffentlichungstag und Bekanntmachung des Hinweises auf die Patenterteilung: **21.07.2010**
(21) Anmeldenummer: 06725183.5
(22) Anmeldetag: 21.03.2006
(51) Int. Cl.: F01N 3/027

(54) **VORRICHTUNG ZUM ABSCHEIDEN VON RUSSPARTIKEL AUS EINEM ABGASSTROM**
DEVICE FOR REMOVING SOOT PARTICLES FROM AN EXHAUST GAS STREAM
DISPOSITIF POUR SEPARER DES PARTICULES DE SUIE D'UN FLUX DE GAZ D'ECHAPPEMENT

(30) Priorität: 08.06.2005 AT 9672005
(43) Veröffentlichungstag der Anmeldung: 27.02.2008
(73) Patentinhaber: Fleck, Carl Maria, Prof. Dr., 2391 Kaltenleutgeben (AT)
(72) Erfinder: Fleck, Carl Maria, Prof. Dr., 2391 Kaltenleutgeben (AT)
(74) Vertreter: KLIMENT & HENHAPEL
(86) Internationale Anmeldenummer: PCT/EP2006/060895
(87) Internationale Veröffentlichungsnummer: WO 2006/131406

(56) Entgegenhaltungen:
- EP-A- 1 229 992
- FR-A- 2 779 177
- US-A- 4 897 096
- PATENT ABSTRACTS OF JAPAN Bd. 2003, Nr. 06, 3. Juni 2003 (2003-06-03) -& JP 2003 049632 A (NIPPON KOUATSU ELECTRIC CO), 21. Februar 2003 (2003-02-21)

## Beschreibung

Die Erfindung betrifft eine Vorrichtung zum Abscheiden von Russpartikel aus einem Abgasstrom mit einem keramischen Wabenkörper mit vom Abgas durchströmbaren und in Längsrichtung des Wabenkörpers verlaufenden Kanälen, wobei der Wabenkörper mit Elektroden zur Erzeugung eines elektrischen Feldes, das jeweils quer zur Achse der Kanäle orientiert ist, versehen ist, gemäß dem Oberbegriff von Anspruch 1.

Gemäß dem Stand der Technik sind verschiedene Ausführungsformen solcher Vorrichtungen zum Abscheiden von Russpartikel, die im Folgenden auch als Filter bzw. als Dieselpartikelfilter bezeichnet werden, bekannt. Die Nachrüstung von Dieselpartikelfiltern fokussiert sich dabei immer mehr auf plasmaregenerierte Filtersysteme, insbesondere mit beidseitig offenen Kanälen, die wahrscheinlich als einzige eine Regeneration des Filters bei Temperaturen unter 200°C, sehr oft auch bis zu unter 150°C, gewährleisten können. Systeme dieser Art werden etwa in den Patentschriften EP 0 880 642 B1, EP 0 332 609 B1, EP 0 537 217 B1, EP 0 885 647 B1 und A 1866/2004 beschrieben. Dabei werden die aufgeladenen Russpartikel in den Kanälen eines Wabenkörpers mit beidseitig offenen Kanälen durch ein elektrisches Feld abgeschieden, das durch Elektroden außerhalb des Wabenkörpers errichtet wird und in seine Kanäle eindringt. Durch die Stärke dieses Abscheidefeldes entwickelt sich auch ein sehr weiches Elektronenplasma, das den Russ elektrochemisch oxidiert. Neben der tiefen Regenerationstemperatur besitzt dieses System noch eine weitere Eigenschaft, nämlich ihren hohen Abscheidegrad. Werden die Russpartikel gut aufgeladen und ist der Querschnitt des Wabenkörpers so bemessen, dass sich eine laminare Strömung ausbilden kann, werden immerhin 98% bis 99% der Partikel abgeschieden.

Allerdings bereiten bekannte Systeme dieser Art Schwierigkeiten hinsichtlich ihres Platzbedarfes, die sich insbesondere bei Nachrüstungen stellen. Um den Wabenkörper einerseits so groß wie möglich auszuführen, andererseits aber möglichst nahe an den Motor heranzukommen, wäre es vorteilhaft, ihn möglichst gut an die Kontur des Unterbodens in Motornähe anzupassen. Damit ergeben sich asymmetrisch elliptische und trapezförmige Querschnitte, in die mit Hilfe außen liegender Elektroden kein hinreichend homogenes elektrisches Feld eingeleitet werden kann, um eine Regeneration durchzuführen.

Des weiteren zeigt sich bei bekannten Filtersystemen ein weiterer Nachteil: Um mit dem keramischen Wabenkörper in seinem Metallgehäuse, seinem Canning, eine entsprechende Zeitstandsfestigkeit zu erreichen, wird er mit einer Matte aus Steinwolle mit hohem Druck in seine Metallhülle gespannt ("gecannt"). Oft wird auch unter Druck die Steinwolle mit Glimmer fixiert, der sich erst bei einer bestimmten Temperatur öffnet, und so den Druck der Matte auf den Wabenkörper seinerseits noch erhöht. Dieser Druck ist notwendig, um den Wabenkörper bei jeder Temperatur und über viele 100.000 km bei jedem Betriebszustand an seinem Platz zu halten. Um diesem hohen Packungsdruck standzuhalten, sind alle Wabenkörper mehr oder weniger rund, oder zumindest stark abgerundet bis elliptisch. Diese Formen ermöglichen durch äußere Elektroden kein auch nur annähernd homogenes elektrisches Feld im Inneren des Wabenkörpers zu errichten.

Als weiterer Nachteil bekannter Filtersysteme zeigt sich, dass großvolumige Dieselmotore, insbesondere Dieselmotore für Lastkraftwagen, Baumaschinen, Schiffsmotore und dergleichen, auch Wabenkörper mit sehr großen Querschnitten benötigen. Dem steht entgegen, dass bei einer Anwendung gepulster elektrischer Felder (siehe etwa Patentschriften EP 1 229 992 B1 oder A 1866/2004) der maximale Elektrodenabstand etwa 30 mm bis 40 mm, vorzugsweise 20 mm, betragen kann. Dieser maximal mögliche Elektrodenabstand beschränkt die ausführbare Größe der Wabenkörper.

Die US 4 897 096 beschreibt einen Partikelfilter mit einem keramischen Wabenkörper, der mit wechselseitig verschlossenen Kanälen versehen ist, und in dem die Russpartikel mechanisch an den Wänden der Kanäle abgeschieden werden. Zur Optimierung des Abbrennens abgeschiedener Russpartikel wird vorgeschlagen, durch Verwendung eines Elektrodenpaars die Dicke der an den Wänden abgelagerten Russschicht zu ermitteln.

Es ist daher das Ziel der Erfindung eine Vorrichtung zum Abscheiden von Russpartikel zu schaffen, die diese Nachteile vermeidet. Insbesondere soll die Vorrichtung auch bei Wabenkörper, deren Querschnitt von einer kreis- bzw. kreisringförmigen Form abweicht, ein weitestgehend homogenes elektrisches Feld im Inneren des Wabenkörpers ermöglichen. Des Weiteren sollen sich keine Beschränkungen hinsichtlich der Größe des Wabenkörpers ergeben. Die Vorrichtung soll sich dabei durch hohe strukturelle Stabilität und Belastbarkeit auszeichnen.

Diese Ziele werden durch die Merkmale von Anspruch 1 erreicht. Anspruch 1 bezieht sich auf eine Vorrichtung zum Abscheiden von Russpartikel aus einem Abgasstrom mit einem keramischen Wabenkörper mit vom Abgas durchströmbaren und in Längsrichtung des Wabenkörpers verlaufenden Kanälen, wobei der Wabenkörper mit Elektroden zur Erzeugung eines elektrischen Feldes, das jeweils quer zur Achse der Kanäle orientiert ist, versehen ist, wobei erfindungsgemäß vorgesehen ist, dass die Elektroden jeweils durch eine Gruppe von Kanälen, in denen jeweils zumindest teilweise entlang ihrer axialen Erstreckung ein elektrischer Leiter eingebracht ist, gebildet werden. Das Einbringen eines Leiters kann prinzipiell auf unterschiedliche Weise erfolgen. So können etwa die Kanäle einer Kanalgruppe, die eine Elektrode darstellen, über ihren gesamten Querschnitt und über weite Teile ihrer axialen Erstreckung mit einem elektrischen Leiter ausgefüllt sein. Alternativ können aber auch elektrisch leitfähige Drähte, Flachbänder oder Flacheisen in die Kanäle eingeschoben sein, die sich somit nur teilweise über den Querschnitt der Kanäle erstrecken. Vorzugsweise ist gemäß Anspruch 2 aber vorgesehen, dass die Elektroden jeweils durch eine Gruppe von Kanälen gebildet werden, deren Innenwände jeweils entlang der axialen Erstreckung der Kanäle zumindest teilweise mit einer metallischen Beschichtung versehen sind. Verfahren für die Beschichtung der Innenwände der Kanäle sind bekannt, so kann die Beschichtung etwa mithilfe elektrolytischer Methoden erfolgen. Den elektrischen Leiter in Form einer Beschichtung der Kanalwände einzubringen ist insbesondere deshalb vorteilhaft, weil sie die strukturelle Stabilität und Belastbarkeit des Wabenkörpers kaum beeinträchtigt.

Die Elektroden werden somit erfindungsgemäß nicht an äußeren Begrenzungswänden des Wabenkörpers angeordnet, sondern erstrecken sich in Form von Gruppen von Kanälen im Inneren des Wabenkörpers, die jeweils mit einem elektrischen Leiter versehen wurden. Jede dieser Gruppen definiert dabei eine Elektrode, wobei es unterschiedliche Möglichkeiten der Auswahl für jene Kanäle gibt, die Bestandteil einer Kanalgruppe und somit einer Elektrode sein sollen.

So wäre es etwa denkbar, dass die Gruppen von Kanälen jeweils durch kreisförmig um die Längsachse des Wabenkörpers angeordnete Kanäle gebildet werden, sodass durch jede Gruppe von Kanälen eine gekrümmte, vorzugsweise zylindrische, Elektrodenfläche definiert wird. Es kann aber auch gemäß Anspruch 3 vorgesehen sein, dass die Gruppen von Kanälen jeweils durch nebeneinander liegende Kanäle gebildet werden, sodass durch jede Gruppe von Kanälen eine ebene Elektrodenfläche definiert wird. Zwar stellen die beschichteten Innenwände der Kanäle prinzipiell dreidimensionale Anordnungen dar, der Querschnitt der Kanäle ist im Vergleich zum Querschnitt des Wabenkörpers allerdings sehr klein, sodass eine durch eine Kanalgruppe gebildete Elektrode hinsichtlich ihrer elektrischen Eigenschaften durch eine ebene bzw. gekrümmte Elektrodenfläche approximiert werden kann. Im Fall von nebeneinander liegenden Kanälen mit jeweils rechteckigem Querschnitt kann die Elektrodenfläche etwa als jene Fläche gedacht werden, die durch die Längsachsen der jeweiligen Kanäle definiert wird. Gemäß Anspruch 3 ergeben sich somit horizontale Elektrodenflächen, die den Wabenkörper durchziehen, und gemäß Anspruch 4 bevorzugt parallel zueinander verlaufen. Selbstverständlich könnten die Elektrodenflächen aber auch senkrecht angeordnet werden, indem Kanäle zur Beschichtung ausgewählt werden, die innerhalb einer eine Elektrode bildenden Kanalgruppe jeweils übereinander liegen.

Gemäß Anspruch 5 weisen zwei benachbarte Elektrodenflächen einen Abstand von unter 40 mm auf, und gemäß Anspruch 6 einen Abstand von 15-25 mm. Dadurch kann ein homogenes elektrisches Feld auch in vollkommen asymmetrischen Bauformen des Wabenkörpers sichergestellt werden.

Gemäß Anspruch 7 kann vorgesehen sein, dass die Gruppen von Kanälen jeweils durch nebeneinander liegende Kanäle gebildet werden, sodass durch jede Gruppe von Kanälen eine gekrümmte, vorzugsweise zylinderförmige, Elektrodenfläche definiert wird.

Gemäß Anspruch 8 ist vorgesehen, dass jeweils zwei benachbarte Elektrodenflächen gegenpolig kontaktiert sind. Das kann gemäß Anspruch 9 etwa erfolgen, indem sich die elektrische Kontaktierung einer Elektrodenfläche an einer Stirnseite des Wabenkörpers befindet, und die elektrische Kontaktierung der jeweils benachbarten Elektrodenflächen an der gegenüberliegenden Stirnseite des Wabenkörpers. Hierzu kann gemäß Anspruch 10 vorzugsweise vorgesehen sein, dass die Kontaktierung der jeweiligen Elektrodenfläche durch in die der betreffenden Elektrodenfläche zugeordneten, mit einem elektrischen Leiter versehenen Kanäle eingeschobene Metallbürsten gebildet wird, wobei in jeder der Kanäle mindestens eine, vorzugsweise mehrere Metallborsten der Bürste eingeschoben sind. Um die Gefahr von Spannnungsüberschlägen zwischen zwei benachbarten Elektrodenflächen zu vermeiden, ist es gemäß Anspruch 11 vorteilhaft, wenn das der Kontaktierung gegenüberliegende Ende eines mit einem elektrischen Leiter versehenen Kanals einen vom Leiter freien Endbereich aufweist, der sich gemäß Anspruch 12 etwa über einen axialen Bereich von zumindest 10-20 mm erstreckt. Zusätzlich kann gemäß Anspruch 13 das der Kontaktierung jeweils gegenüberliegende Ende eines mit einem elektrischen Leiter versehenen Kanals verschlossen sein.

Anspruch 14 sieht vor, dass jene Kanäle, die sich außerhalb des von jeweils zwei benachbarten Elektrodenflächen begrenzten Raumbereiches des Wabenkörpers befinden, zumindest eingangsseitig verschlossen sind. Dadurch kann der Abscheidegrad verbessert werden, da auf diese Weise sichergestellt wird, dass der Abgasstrom nur durch jene Kanäle geleitet wird, in denen ein weitestgehend homogenes elektrisches Feld besteht, also durch jene Kanäle, die sich innerhalb des von jeweils zwei benachbarten Elektrodenflächen begrenzten Raumbereiches des Wabenkörpers befinden.

Eine Ausführung des Wabenkörpers, bei der insbesondere die Feinstruktur der Homogenität des elektrischen Feldes in den einzelnen Kanälen verbessert wird, kann mithilfe der Merkmale von Anspruch 15 erreicht werden, indem der lichte Querschnitt jener Kanäle, die sich innerhalb des von jeweils zwei benachbarten Elektrodenflächen begrenzten Raumbereiches des Wabenkörpers befinden, jeweils rechtecksförmig ausgebildet ist, wobei zwei normal zu den Elektrodenflächen aufeinander folgende Kanäle jeweils ziegelmauerartig gegeneinander versetzt sind. Eine weitere Erhöhung der strukturellen Stabilität kann durch die Maßnahmen von Anspruch 16 erreicht werden, indem jene Kanäle, die sich außerhalb des von jeweils zwei benachbarten Elektrodenflächen begrenzten Raumbereiches des Wabenkörpers befinden, einen kleineren lichten Querschnitt aufweisen, als jene Kanäle, die sich innerhalb des von jeweils zwei benachbarten Elektrodenflächen begrenzten Raumbereiches des Wabenkörpers befinden. Jene Abschnitte des Wabenkörpers, die sich außerhalb der Bereiche mit homogenem elektrischen Feld befinden, und somit bevorzugt nicht zur Filterung von Partikeln beitragen, sind somit dichter ausgeführt und tragen auf diese Weise zur Erhöhung der strukturellen Stabilität des Wabenkörpers bei. Dabei kann gemäß Anspruch 17 auch vorgesehen sein, dass der lichte Querschnitt jener Kanäle, die sich außerhalb des von jeweils zwei benachbarten Elektrodenflächen begrenzten Raumbereiches des Wabenkörpers befinden, quadratisch ausgeführt ist.

Um die Durchführung der metallischen Beschichtung zu erleichtern und dabei die strukturelle Stabilität nicht zu sehr zu beeinträchtigen, kann gemäß Anspruch 18 vorgesehen sein, dass jene Kanäle, die mit einem elektrischen Leiter versehen sind, dickere Innenwände sowie einen größeren lichten Querschnitt aufweisen, als andere Kanäle des Wabenkörpers.

Die erfindungsgemäße Vorrichtung erlaubt insbesondere die vorteilhaften Ausführungsformen gemäß Anspruch 19 und 20, nämlich dass der Wabenkörper eine konvexe bzw. trapezförmige Umfangslinie aufweist.

Die Erfindung wird im Folgenden anhand der beiliegenden Figuren näher erläutert. Dabei zeigen die
Fig. 1 eine schematische Darstellung eines Querschnitts einer Ausführungsform einer erfindungsgemäßen Vorrichtung, wobei insbesondere horizontale und parallel zueinander verlaufende Elektrodenflächen ersichtlich sind, und
Fig. 2 eine Detailansicht von Fig. 1, wobei insbesondere die Anordnung der Kanäle, sowie die Beschichtung von Kanälen einer Kanalgruppe, die eine Elektrodenfläche definiert, ersichtlich ist.

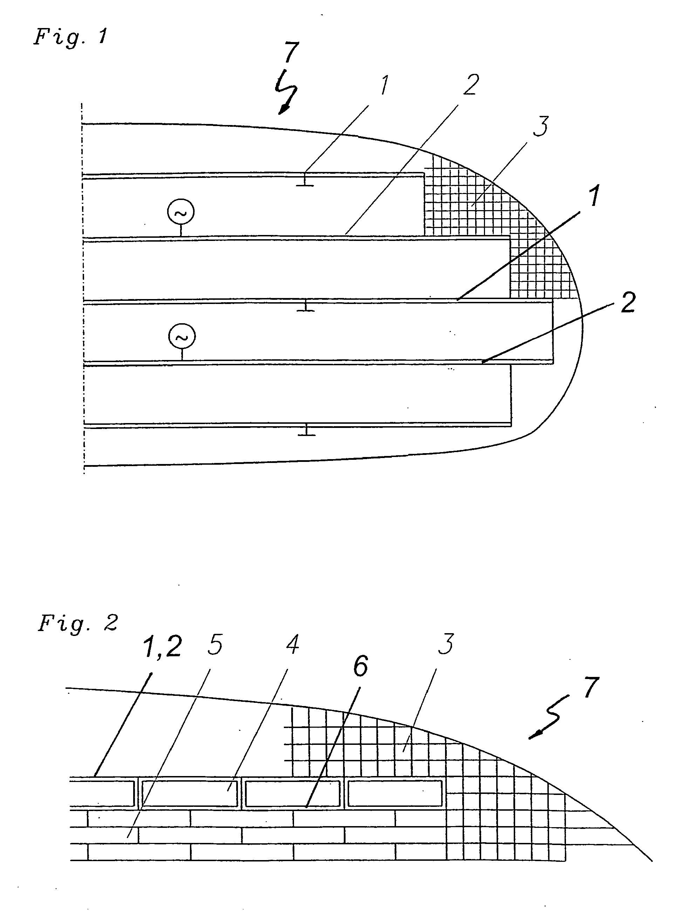

Die Fig. 1 und 2 zeigen jeweils eine schematische Darstellung eines Querschnitts eines Wabenkörpers 7, vorzugsweise aus einem keramischen Material. Dabei ist jeweils ein Wabenkörper 7 mit konvexer, nämlich elliptischer Umfangslinie dargestellt, er könnte aber auch andere Querschnittsformen aufweisen, etwa eine Trapezform. Besonders für Ausführungsformen dieser Art stellt sich die erfindungsgemäße Weiterbildung als besonders vorteilhaft dar. Der Wabenkörper 7 kann monolithisch vorliegen, oder aber auch aus mehreren Teilstücken zusammengesetzt sein.

Gemäß dem Stand der Technik würde der Wabenkörper 7 eine zentrische, zylindrische Bohrung aufweisen, in der eine Hochspannungselektrode angeordnet ist. Die Gegenelektrode würde sich an der Außenseite des Wabenkörpers 7 befinden. Eine solche Bohrung ist aber gemäß der erfindungsgemäßen Merkmale nicht mehr notwendig, stattdessen kann der Wabenkörper 7, wie in den Fig. 1 und 2 dargestellt ist, strukturell einheitlich ausgeführt sein.

Der Wabenkörper 7 weist Kanäle 3,4,5 auf, die in Längsrichtung des Wabenkörpers 7 verlaufen, und etwa beidseitig an den Stirnseiten des Wabenkörpers 7 offen sind. Bei manchen Wabenkörpern 7, die in der Praxis Verwendung finden, sind die Kanäle 3,4,5 aber auch wechselseitig offen und geschlossen, sodass der Abgasstrom durch einen an der Eintrittsseite offenen, aber an dessen Austrittsseite verschlossenen Kanal 3,4,5 eintritt, und zum Verlassen des Wabenkörpers 7 durch die Innenwand des betreffenden Kanals 3,4,5 zum benachbarten Kanal 3,4,5, der an der Eintrittsseite verschlossen, aber an der Austrittsseite offen ist, hindurchtreten muss. Die Erfindung eignet sich aber prinzipiell für beide Ausführungsvarianten, also jene der beidseitig offenen, als auch der wechselseitig offenen Kanäle 3,4,5.

Erfindungsgemäß werden die Elektroden 1,2 jeweils durch eine Gruppe von Kanälen 4, in denen jeweils zumindest teilweise entlang ihrer axialen Erstreckung ein elektrischer Leiter 6 eingebracht ist, gebildet. Gemäß der in den Fig. 1 und 2 gezeigten Ausführungsform werden die Elektroden 1,2 jeweils durch eine Gruppe von Kanälen 4 gebildet, deren Innenwände jeweils entlang der axialen Erstreckung der Kanäle 4 zumindest teilweise mit einer metallischen Beschichtung 6 versehen sind: Wie bereits erwähnt wurde, stellen die beschichteten Innenwände der Kanäle 4 zwar prinzipiell dreidimensionale Anordnungen dar, der Querschnitt der Kanäle 4 ist im Vergleich zum Querschnitt des Wabenkörpers 7 allerdings sehr klein, sodass eine durch eine Kanalgruppe gebildete Elektrode hinsichtlich ihrer elektrischen Eigenschaften durch eine ebene Elektrodenfläche 1,2 approximiert werden kann. Wie insbesondere aus der Fig. 2 ersichtlich ist, werden die Gruppen von Kanälen 4 jeweils durch nebeneinander liegende Kanäle 4 gebildet, sodass durch jede Gruppe von Kanälen 4 eine ebene Elektrodenfläche 1,2 definiert wird. In diesem Fall von nebeneinander liegenden Kanälen 4 mit jeweils rechteckigem Querschnitt kann die Elektrodenfläche 1,2 etwa als jene Fläche gedacht werden, die durch die Längsachsen der jeweiligen Kanäle 4 definiert wird.

Verfahren zur Herstellung der Beschichtung 6 sind bekannt, so kann die Beschichtung 6 etwa über elektrolytische Verfahren hergestellt werden, bei denen ein Draht in den zu beschichteten Kanal 4 eingezogen wird, und bei Anlegen einer Spannung metallische Ionen des Elektrolyts an der Innenwand des Kanals 4 abgeschieden werden. Für die metallische Beschichtung 6 können etwa Kupfer, Kupfer-Chrom-Schichten oder andere leitfähige Stoffe, die sich bei der Herstellung und beim Betrieb der erfindungsgemäßen Vorrichtung als geeignet erweisen, vorgesehen sein.

Wie aus der Fig. 1 ersichtlich ist, verlaufen die ebenen Elektrodenflächen 1,2 jeweils horizontal und parallel zueinander. Der Abstand zweier benachbarter Elektrodenflächen 1 und 2 beträgt vorzugsweise weniger als 40 mm, etwa 15-25 mm. Dadurch kann zwischen den Elektrodenflächen 1 und 2 ein homogenes elektrisches Feld sichergestellt werden, und zwar insbesondere in jenen Raumbereichen, die sich innerhalb des von jeweils zwei benachbarten Elektrodenflächen 1,2 begrenzten Raumbereiches des Wabenkörpers 7 befinden, der im folgenden auch als homogener Feldbereich bezeichnet wird.

Zwei benachbarte Elektrodenflächen 1 und 2 sind jeweils gegenpolig kontaktiert, wobei in der Fig. 1 etwa die Elektrodenfläche 1 geerdet ist, und die Elektrodenfläche 2 mit gepulster Hochspannung versorgt wird. Die erfindungsgemäße Vorrichtung ist aber auch bei Ausführungsvarianten anwendbar, bei denen zur Elektrodenfläche 2 eine Gleichspannung zugeführt wird.

An einer Stirnseite des Wabenkörpers 7 sind elektrische Kontaktierungen (in den Fig. 1 und 2 nicht dargestellt) der Elektrodenflächen 1 angeordnet, wobei sich die elektrische Kontaktierung der jeweils benachbarten Elektrodenflächen 2 vorzugsweise an der gegenüberliegenden Stirnseite des Wabenkörpers 7 befindet. Die Kontaktierung der jeweiligen Elektrodenfläche 1,2 wird durch in die der betreffenden Elektrodenfläche 1,2 zugeordneten, metallisch beschichteten Kanäle 4 eingeschobene Metallbürsten gebildet, wobei in jeder der Kanäle 4 mindestens eine, vorzugsweise mehrere Metallborsten der Bürste eingeschoben sind.

Um die Gefahr von Spannnungsüberschlägen zwischen zwei benachbarten Elektrodenflächen 1,2 zu vermeiden, ist es wie oben erwähnt vorteilhaft, wenn das der Kontaktierung gegenüberliegende Ende eines metallisch beschichteten Kanals 4 einen unbeschichteten Endbereich aufweist, der sich etwa über einen axialen Bereich von zumindest 10-20 mm erstreckt. Vorzugsweise ist das der Kontaktierung jeweils gegenüberliegende Ende eines mit einem elektrischen Leiter 6 versehenen Kanals 4 verschlossen.

Im Folgenden wird auf eine Ausführungsform des Wabenkörpers 7 eingegangen, der sich insbesondere hinsichtlich der strukturellen Stabilität und Belastbarkeit als besonders vorteilhaft erweist. So können jene Kanäle 3, die sich außerhalb des homogenen Feldbereichs befinden, einen kleineren lichten Querschnitt aufweisen, als jene Kanäle 4,5, die sich innerhalb des homogenen Feldbereichs befinden, sodass der Wabenkörper 7 in diesen Bereichen über eine dichtere Struktur verfügt. Der lichte Querschnitt dieser Kanäle 3, die sich außerhalb des homogenen Feldbereichs befinden, kann dabei auch quadratisch ausgeführt sein, was deren strukturelle Belastbarkeit zusätzlich erhöht. Jene Kanäle 4, die mit einer metallischen Beschichtung 6 versehen sind, können dickere Innenwände sowie einen größeren lichten Querschnitt aufweisen, als alle anderen Kanäle 3,5 des Wabenkörpers 7. Das erleichtert einerseits die Herstellung der metallischen Beschichtung 6, und stellt andererseits aufgrund der dickeren Innenwände auch deren strukturelle Belastbarkeit sicher. Wie insbesondere in der Fig. 2 ersichtlich ist, kann der lichte Querschnitt jener Kanäle 5, die sich innerhalb des homogenen Feldbereichs befinden, jeweils rechtecksförmig ausgebildet sein, wobei zwei normal zu den Elektrodenflächen 1,2 aufeinander folgende Kanäle 5 jeweils ziegelmauerartig gegeneinander versetzt sind. Diese Ausführung des Wabenkörpers verbessert insbesondere die Feinstruktur der Homogenität des elektrischen Feldes in den einzelnen Kanälen.

Jene Kanäle 3, die sich außerhalb des homogenen Feldbereichs des Wabenkörpers 7 befinden, können außerdem eingangsseitig, wahlweise auch ausgangsseitig, verschlossen sein. Dadurch kann der Abscheidegrad verbessert werden, da auf diese Weise sichergestellt wird, dass der Abgasstrom nur durch jene Kanäle 5 geleitet wird, in denen ein weitestgehend homogenes elektrisches Feld besteht.

Mithilfe der erfindungsgemäßen Vorrichtung wird somit ein Filter zum Abscheiden von Russpartikel verwirklicht, der auch bei Wabenkörper 7, deren Querschnitt von einer kreis- bzw. kreisringförmigen Form abweicht, ein weitestgehend homogenes elektrisches Feld im Inneren des Wabenkörpers 7 ermöglicht. Des Weiteren ergeben sich keine Beschränkungen hinsichtlich der Größe des Wabenkörpers 7, da je nach Größe des Wabenkörpers 7 eine angepasste Anzahl an Elektrodenflächen 1,2 vorgesehen sein kann. Die Vorrichtung zeichnet sich dabei durch hohe strukturelle Stabilität und Belastbarkeit aus.

## Patentansprüche

1. Vorrichtung zum Abscheiden von Russpartikel aus einem Abgasstrom mit einem keramischen Wabenkörper (7) mit vom Abgas durchströmbaren und in Längsrichtung des Wabenkörpers verlaufenden Kanälen (3,4,5), wobei der Wabenkörper (7) mit Elektroden zur Erzeugung eines elektrischen Feldes, das jeweils quer zur Achse der Kanäle (3,4,5) orientiert ist, versehen ist, **dadurch gekennzeichnet, dass** die Elektroden jeweils durch eine Gruppe von Kanälen (4), in denen jeweils zumindest teilweise entlang ihrer axialen Erstreckung ein elektrischer Leiter (6) eingebracht ist, gebildet werden.

2. Vorrichtung nach Anspruch 1, **dadurch gekennzeichnet, dass** die Elektroden jeweils durch eine Gruppe von Kanälen (4), deren Innenwände jeweils entlang der axialen Erstreckung der Kanäle (4) zumindest teilweise mit einer metallischen Beschichtung (6) versehen sind, gebildet werden.

3. Vorrichtung nach Anspruch 1 oder 2, **dadurch gekennzeichnet, dass** die Gruppen von Kanälen (4) jeweils durch nebeneinander liegende Kanäle (4) gebildet werden, sodass durch jede Gruppe von Kanälen (4) eine ebene Elektrodenfläche (1,2) definiert wird.

4. Vorrichtung nach Anspruch 3, **dadurch gekennzeichnet, dass** die ebenen Elektrodenflächen (1,2) jeweils parallel zueinander sind.

5. Vorrichtung nach Anspruch 4, **dadurch gekennzeichnet, dass** zwei benachbarte Elektrodenflächen (1,2) einen Abstand von unter 40 mm aufweisen.

6. Vorrichtung nach Anspruch 5, **dadurch gekennzeichnet, dass** zwei benachbarte Elektrodenflächen (1,2) einen Abstand von 15-25 mm aufweisen.

7. Vorrichtung nach Anspruch 1 oder 2, **dadurch gekennzeichnet, dass** die Gruppen von Kanälen (4) jeweils durch nebeneinander liegende Kanäle (4) gebildet werden, sodass durch jede Gruppe von Kanälen (4) eine gekrümmte, vorzugsweise zylinderförmige, Elektrodenfläche (1,2) definiert wird.

8. Vorrichtung nach einem der Ansprüche 3 bis 7, **dadurch gekennzeichnet, dass** jeweils zwei benachbarte Elektrodenflächen (1,2) gegenpolig kontaktiert sind.

9. Vorrichtung nach Anspruch 8, **dadurch gekennzeichnet, dass** sich die elektrische Kontaktierung einer Elektrodenfläche (1) an einer Stirnseite des Wabenkörpers (7) befindet, und die elektrische Kontaktierung der jeweils benachbarten Elektrodenflächen (2) an der gegenüberliegenden Stirnseite des Wabenkörpers (7).

10. Vorrichtung nach Anspruch 9, **dadurch gekennzeichnet, dass** die Kontaktierung der jeweiligen Elektrodenfläche (1,2) durch in die der betreffenden Elektrodenfläche (1,2) zugeordneten, mit einem elektrischen Leiter (6) versehenen Kanäle (4) eingeschobene Metallbürsten gebildet wird, wobei in jeder der Kanäle (4) mindestens eine, vorzugsweise mehrere Metallborsten der Bürste eingeschoben sind.

11. Vorrichtung nach Anspruch 9 oder 10, **dadurch gekennzeichnet, dass** das der Kontaktierung gegenüberliegende Ende eines mit einem elektrischen Leiter (6) versehenen Kanals (4) einen vom Leiter (6) freien Endbereich aufweist.

12. Vorrichtung nach Anspruch 11, **dadurch gekennzeichnet, dass** der Endbereich eine axiale Erstreckung von zumindest 10-20 mm aufweist.

13. Vorrichtung nach einem der Ansprüche 9 bis 12, **dadurch gekennzeichnet, dass** das der Kontaktierung jeweils gegenüberliegende Ende eines mit einem elektrischen Leiter (6) versehenen Kanals (4) verschlossen ist.

14. Vorrichtung nach einem der Ansprüche 3 bis 13, **dadurch gekennzeichnet, dass** jene Kanäle (3), die sich außerhalb des von jeweils zwei benachbarten Elektrodenflächen (1,2) begrenzten Raumbereiches des Wabenkörpers (7) befinden, zumindest eingangsseitig verschlossen sind.

15. Vorrichtung nach einem der Ansprüche 3 bis 14, **dadurch gekennzeichnet, dass** der lichte Querschnitt jener Kanäle (5), die sich innerhalb des von jeweils zwei benachbarten Elektrodenflächen (1,2) begrenzten Raumbereiches des Wabenkörpers (7) befinden, jeweils rechtecksförmig ausgebildet ist, wobei zwei normal zu den Elektrodenflächen (1,2) aufeinander folgende Kanäle (5) jeweils ziegelmauerartig gegeneinander versetzt sind.

16. Vorrichtung nach einem der Ansprüche 3 bis 15, **dadurch gekennzeichnet, dass** jene Kanäle (3), die sich außerhalb des von jeweils zwei benachbarten Elektrodenflächen (1,2) begrenzten Raumbereiches des Wabenkörpers (7) befinden, einen kleineren lichten Querschnitt aufweisen, als jene Kanäle (5), die sich innerhalb des von jeweils zwei benachbarten Elektrodenflächen (1,2) begrenzten Raumbereiches des Wabenkörpers (7) befinden.

17. Vorrichtung nach Anspruch 16, **dadurch gekennzeichnet, dass** der lichte Querschnitt jener Kanäle (3), die sich außerhalb des von jeweils zwei benachbarten Elektrodenflächen (1,2) begrenzten Raumbereiches des Wabenkörpers (7) befinden, quadratisch ausgeführt ist.

18. Vorrichtung nach einem der Ansprüche 2 bis 17, **dadurch gekennzeichnet, dass** jene Kanäle (4), die mit einem elektrischen Leiter (6) versehen sind, dickere Innenwände sowie einen größeren lichten Querschnitt aufweisen, als andere Kanäle (3,5) des Wabenkörpers.

19. Vorrichtung nach einem der Ansprüche 1 bis 18, **dadurch gekennzeichnet, dass** der Wabenkörper (7) eine konvexe Umfangslinie aufweist.

20. Vorrichtung nach einem der Ansprüche 1 bis 18, **dadurch gekennzeichnet, dass** der Wabenkörper (7) eine trapezförmige Umfangslinie aufweist.

## Claims

1. An apparatus for removing soot particles from an exhaust gas stream, comprising a ceramic honeycomb body (7) with ducts (3, 4, 5) which can be flowed through by exhaust gas and extend in the longitudinal direction of the honeycomb body, with the honeycomb body (7) being provided with electrodes for generating an electric field which is each oriented transversally to the axis of the ducts (3, 4, 5), **characterized in that** the electrodes are each formed by a group of ducts (4) in which an electric conductor (6) is introduced at least partly along their axial extension.

2. An apparatus according to claim 1, **characterized in that** the electrodes are each formed by a group of ducts (4) whose inside walls are each provided at least partly with a metallic coating (6) along the axial extension of the ducts (4).

3. An apparatus according to claim 1 or 2, **characterized in that** the groups of ducts (4) are each formed by ducts (4) situated adjacent to one another, so that each group of ducts (4) defines a plane electrode surface (1, 2).

4. An apparatus according to claim 3, **characterized in that** the plane electrode surfaces (1, 2) are each parallel with respect to each other.

5. An apparatus according to claim 4, **characterized in that** two adjacent electrode surfaces (1, 2) have a distance of less than 40 mm.

6. An apparatus according to claim 5, **characterized in that** two adjacent electrode surfaces (1, 2) have a distance of 15 to 25 mm.

7. An apparatus according to claim 1 or 2, **characterized in that** the groups of ducts (4) are each formed by ducts (4) situated next to one another, so that a curved, preferably cylindrical electrode surface (1, 2) is defined by each group of ducts (4).

8. An apparatus according to one of the claims 3 to 7, **characterized in that** two adjacent electrode surfaces (1,2) each are contacted in an antipolar manner.

9. An apparatus according to claim 8, **characterized in that** the electric contact of an electrode surface (1) is situated on a face side of the honeycomb body (7) and the electric contact of the respectively adjacent electrode surfaces (2) is made on the opposite face side of the honeycomb body (7).

10. An apparatus according to claim 9, **characterized in that** the establishment of the contact of the respective electrode surface (1, 2) is made by metal brushes pushed into ducts (4) which are provided with an electric conductor (6) and are associated with respective electrode surface (1, 2), with at least one, preferably several metal bristles of the brush being inserted into each of the ducts (4).

11. An apparatus according to claim 9 or 10, **characterized in that** the end of a duct (4) having an electric conductor (6), which end is opposite of the contact point, comprises an end section which is free from a conductor (6).

12. An apparatus according to claim 11, **characterized in that** the end section has an axial extension of at least 10 to 20 mm.

13. An apparatus according to one of the claims 9 to 12, **characterized in that** the end of the duct (4) comprising an electric conductor (6) is sealed, which end is opposite of the contact point.

14. An apparatus according to one of the claims 3 to 13, **characterized in that** those ducts (3) which are located outside of the spatial area of the honeycomb body (7) which is delimited by two adjacent electrode surfaces (1, 2) each are sealed at least on the entrance side.

15. An apparatus according to one of the claims 3 to 14, **characterized in that** the clear opening of those ducts (5) which are located within the spatial area of the honeycomb body (7) which is delimited by two adjacent electrode surfaces (1, 2) each is each arranged in a rectangular way, with two ducts (5) mutually following each other normal to the electrode surfaces (1, 2) are each mutually offset in a brickwork-like manner.

16. An apparatus according to one of the claims 3 to 15, **characterized in that** those ducts (3) which are located outside of the spatial area of the honeycomb body (7) which is delimited by two adjacent electrode surfaces each have a smaller clear opening than those ducts (5) which are situated within the spatial area of the honeycomb body (7) which is delimited by two adjacent electrode surfaces (1, 2) each.

17. An apparatus according to claim 16, **characterized in that** the clear opening of those ducts (3) which are situated outside of the spatial area of the honeycomb body (7) which is delimited by two adjacent electrode surfaces (1, 2) each are provided with a square configuration.

18. An apparatus according to one of the claims 2 to 17, **characterized in that** those ducts (4) which are provided with an electric conductor (6) have thicker inside walls and a larger clear opening than other ducts (3, 5) of the honeycomb body.

19. An apparatus according to one of the claims 1 to 18, **characterized in that** the honeycomb body (7) has a convex circumferential line.

20. An apparatus according to one of the claims 1 to 18, **characterized in that** the honeycomb body (7) has a trapezoid circumferential line.

## Revendications

1. Dispositif pour séparer des particules de suie d'un flux de gaz d'échappement avec un corps alvéolaire en céramique (7) possédant des canaux (3, 4, 5) pouvant être parcourus par le gaz d'échappement et orientés dans le sens longitudinal du corps alvéolaire, dans lequel le corps alvéolaire (7) est muni d'électrodes destinées à produire un champ électrique orienté perpendiculairement à l'axe des canaux (3, 4, 5), **caractérisé en ce que** les électrodes sont formées chacune par un groupe de canaux (4) dans lesquels un conducteur électrique (6) est introduit au moins partiellement le long de leur extension axiale.

2. Dispositif selon la revendication 1, **caractérisé en ce que** les électrodes sont formées chacune par un groupe de canaux (4) dont les parois antérieures sont munies au moins partiellement d'un revêtement métallique (6) le long de l'extension axiale des canaux (4).

3. Dispositif selon la revendication 1 ou 2, **caractérisé en ce que** les groupes de canaux (4) sont formés chacun par des canaux (4) contigus, de sorte que chaque groupe de canaux (4) définit une surface d'électrode plane (1, 2).

4. Dispositif selon la revendication 3, **caractérisé en ce que** les surfaces d'électrode planes (1, 2) sont parallèles les unes aux autres.

5. Dispositif selon la revendication 4, **caractérisé en ce que** deux surfaces d'électrode (1, 2) voisines sont distantes de moins de 40 mm.

6. Dispositif selon la revendication 5, **caractérisé en ce que** deux surfaces d'électrode (1, 2) voisines sont distantes de 15 à 25 mm.

7. Dispositif selon la revendication 1 ou 2, **caractérisé en ce que** les groupes de canaux (4) sont formés chacun par des canaux (4) contigus, de sorte que chaque groupe de canaux (4) définit une surface d'électrode (1, 2) courbe, de préférence cylindrique.

8. Dispositif selon l'une des revendications 3 à 7, **caractérisé en ce que** deux surfaces d'électrode (1, 2) voisines sont mises en contact avec une polarité inversée.

9. Dispositif selon la revendication 8, **caractérisé en ce que** le contact électrique d'une surface d'électrode (1) se trouve sur une face d'extrémité du corps alvéolaire (7) et le contact électrique des surfaces d'électrode (2) voisines sur la face d'extrémité opposée du corps alvéolaire (7).

10. Dispositif selon la revendication 9, **caractérisé en ce que** le contact de chaque surface d'électrode (1, 2) est formé par des brosses métalliques introduites dans les canaux (4) associés à la surface d'électrode (1, 2) concernée et munis d'un conducteur électrique (6), au moins une et de préférence plusieurs soies métalliques de la brosse étant introduites dans chacun des canaux (4).

11. Dispositif selon la revendication 9 ou 10, **caractérisé en ce que** l'extrémité opposée au contact d'un canal (4) muni d'un conducteur électrique (6) présente une zone d'extrémité sans conducteur (6).

12. Dispositif selon la revendication 11, **caractérisé en ce que** la partie d'extrémité a une étendue axiale d'au moins 10 à 20 mm.

13. Dispositif selon l'une des revendications 9 à 12, **caractérisé en ce que** l'extrémité opposée au contact d'un canal (4) muni d'un conducteur électrique (6) est fermée.

14. Dispositif selon l'une des revendications 3 à 13, **caractérisé en ce que** les canaux (3) qui se trouvent en dehors de la zone de volume du corps alvéolaire (7) délimitée par deux surfaces d'électrode (1, 2) sont bouchés au moins du côté de l'entrée.

15. Dispositif selon l'une des revendications 3 à 14, **caractérisé en ce que** la section libre des canaux (5) qui se trouvent à l'intérieur de la zone de volume du corps alvéolaire (7) délimitée par deux surfaces d'électrode (1, 2) a une forme rectangulaire, deux canaux (5) se faisant suite perpendiculairement aux surfaces d'électrode étant décalés l'un par rapport à l'autre à la manière d'un mur de briques.

16. Dispositif selon l'une des revendications 3 à 15, **caractérisé en ce que** les canaux (3) qui se trouvent à l'extérieur de la zone de volume du corps alvéolaire (7) délimitée par deux surfaces d'électrode (1, 2) ont une plus petite section libre que les canaux (5) qui se trouvent à l'intérieur de la zone de volume du corps alvéolaire (7) délimitée par deux surfaces d'électrode (1, 2).

17. Dispositif selon la revendication 16, **caractérisé en ce que** la section libre des canaux (3), qui se trouvent à l'extérieur de la zone de volume du corps alvéolaire (7) délimitée par deux surfaces d'électrode (1, 2) a une forme carrée.

18. Dispositif selon l'une des revendications 2 à 17, **caractérisé en ce que** les canaux (4) munis d'un conducteur électrique (6) ont des parois intérieures plus épaisses et une section libre plus grande que les autres canaux (3,5) du corps alvéolaire.

19. Dispositif selon l'une des revendications 1 à 18, **caractérisé en ce que** le corps alvéolaire (7) présente une ligne de circonférence convexe.

20. Dispositif selon l'une des revendications 1 à 18, **caractérisé en ce que** le corps alvéolaire (7) présente une ligne de circonférence trapézoïdale.
